# EUROPEAN PATENT SPECIFICATION

(11) **EP 1 740 875 B1**
(45) Date of publication and mention of the grant of the patent: **06.07.2011**
(21) Application number: 04730115.5
(22) Date of filing: 28.04.2004
(51) Int. Cl.: F16L 37/092

(54) **SNAP JOINT FOR RESIN PIPE**
SCHNAPPVERBINDUNG FÜR KUNSTSTOFFROHR
JOINT À PRESSION POUR TUYAU EN RÉSINE

(43) Date of publication of application: 10.01.2007
(73) Proprietor: Tabuchi Co., Ltd., Osaka-shi, Osaka 547-0023 (JP)
(72) Inventor: ISHIKAWA, Kazuo, c/o TABUCHI CO., LTD., Osaka-shi, Osaka 547-0023 (JP); TOKUDA, Masaya, c/o TABUCHI CO., LTD., Osaka-shi, Osaka 547-0023 (JP)
(74) Representative: Hering, Hartmut
(86) International application number: PCT/JP2004/006521
(87) International publication number: WO 2005/106311

(56) References cited:
- WO-A-03/044416
- GB-A- 2 255 827
- JP-A- 2003 106 490
- JP-A- 2003 106 490
- JP-U- 04 117 986
- JP-U- 04 138 191
- JP-U- 05 034 390

## Description

### FIELD OF THE INVENTION

The present invention relates to snap joints for use with a relatively soft resin pipe and, in particular, to a snap joint, the connection of operation of which is completed by simply inserting the pipe into the snap joint.

### BACKGOURND OF THE INVENTION

Snap joints are disclosed in Japanese Laid Open Gazette No. 4-119289, Japanese Laid Open Gazette No. 2000-266252, and Japanese Laid Open Gazette No. 2003-106490, for example. A technique disclosed in the above No. 2003-106490 is relatively similar to the present invention in the internal structure thereof, wherein an insertion operation of a resin pipe releases a compression spring to move a chuck ring radially inwardly with the force thereof.

However, the technique disclosed in the same has room for improvements. One that needs to be improved is waterproofness. The shape of an O-ring must be maintained against an extension of a compression spring. Not only the outer circumference of a resin pipe but also the inner circumference of the resin pipe is preferably sealed. Another preferable feature is that the snap joint is disassembled with ease for maintenance or removal purposes.

WO 03/044416 A relates to a quick-release coupling for pipelines, wherein, especially, a lock ring having hooks is provided and an O-ring is fitted over the outer circumference of a sleeve.

GB-A-2 255 827 relates to a pressure indicator in pipeline, wherein U-shaped elastic clips are used for coupling two parts.

JP 2003 106490 A being considered as being the closest prior art document relates to a snap joint, comprising: a joint body having a sleeve extending from a barrel portion thereof (for fitting of the resin pipe); an external cylinder having a front end portion with an insertion hole for receiving the resin pipe, the front end portion being tapered toward the front end thereof and a back end thereof being fixed to the barrel portion of the joint body; a support ring being slidable to a back end of the sleeve in response to the insertion of the resin pipe; a spring holder; a compression spring hold between a front flange portion of the spring holder and a washer being captured by a stopper projection arranged on the back end portion of the spring holder; a chuck ring that is adapted to be driven by a ring and has a shrinkable diameter along the tapered surface of the external cylinder, such that when the compression spring extends, the chuck ring tightly engages the outer circumference of the inserted resin pipe; and an O-ring that is interposed between the ring and the chuck ring and maintains tight contact between the outer circumference of the inserted resin pipe and the inner circumference of the external cylinder.

It is the object of the present invention to allow insertion of the pipe into the coupling but lock it against withdrawal before the chuck ring comes into final engagement with the pipe.

This object is solved by a snap joint of independent claim 1. The dependent claims 2 to 4 show advantageous further developments of the snap joint of claim 1.

According to the present invention when a support ring is pushed into a circular socket, a spring holder shrinks toward the central direction and a spring is released to expand.

In particular, the spring holder compresses the spring between the washer and the flange portion by means of the restraining action of the support ring. When the resin pipe is inserted into the joint, the support ring is slid, and thereby releases the restraining action thereof. The external cylinder easily inwardly shrinks the back end thereof in diameter. With the back end reduced in diameter, the washer easily comes off the stopper projection or abutment projection on the back end, thereby allowing the compression spring to extend. The force of the spring is transferred through the flange portion to the lock ring, the O-ring, and the chuck ring. With the hook thereof, the lock ring tentatively prevents the resin pipe from being slipped off. The chuck ring is shifted to the tapered surface of the external cylinder, and thereby tightly engages with the external circumference of the resin pipe with the diameter thereof reduced. With this tightening, the resin pipe is prevented from being slipped off. The O-ring is compressed between the lock ring and the chuck ring, and is thus tightly in contact with the outer circumference of the resin pipe and the inner circumference of the external cylinder. Since the lock ring and the chuck ring tighten against the resin pipe, the O-ring maintains the compressed shape thereof.

In accordance with the present invention, the external cylinder is detachably fixed to the barrel portion of the body of the snap joint with a U-shaped elastic clip. In this arrangement, the external cylinder is easily removed to disassemble the joint.

In accordance with the present invention, the o-ring is fitted over the outer circumference of the sleeve. The inner circumference of the resin pipe is thus sealed.

In accordance with the present invention, the tapered surface of the external cylinder includes an observation window for monitoring the chuck ring. In this arrangement, a user can monitor through the observation window that the chuck ring is pressed against the tapered surface of the external cylinder by the force of the extending spring during the insertion of the resin pipe.

### BRIEF DESCRIPTION OF THE DRAWINGS

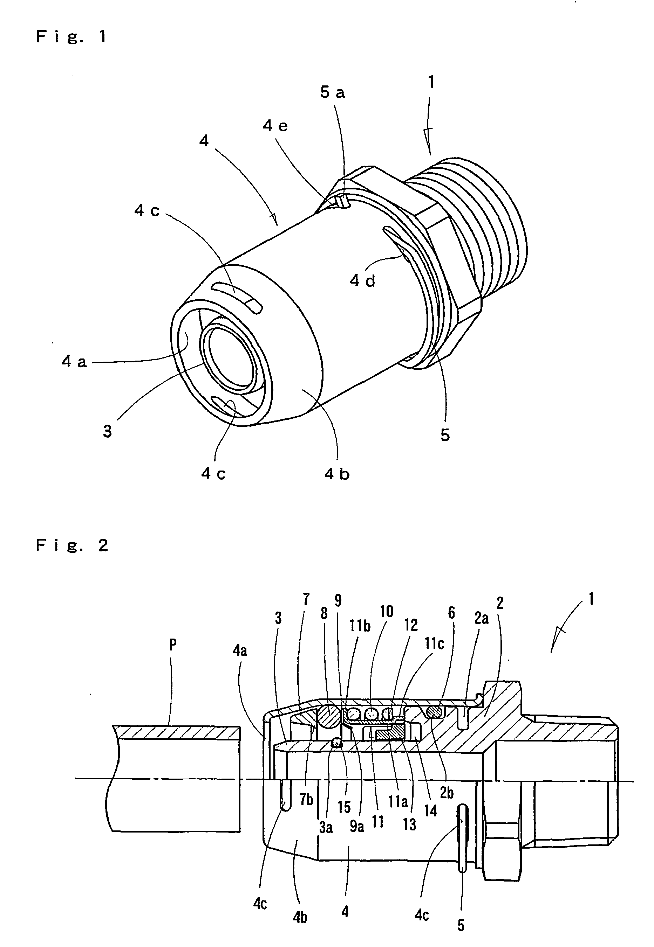

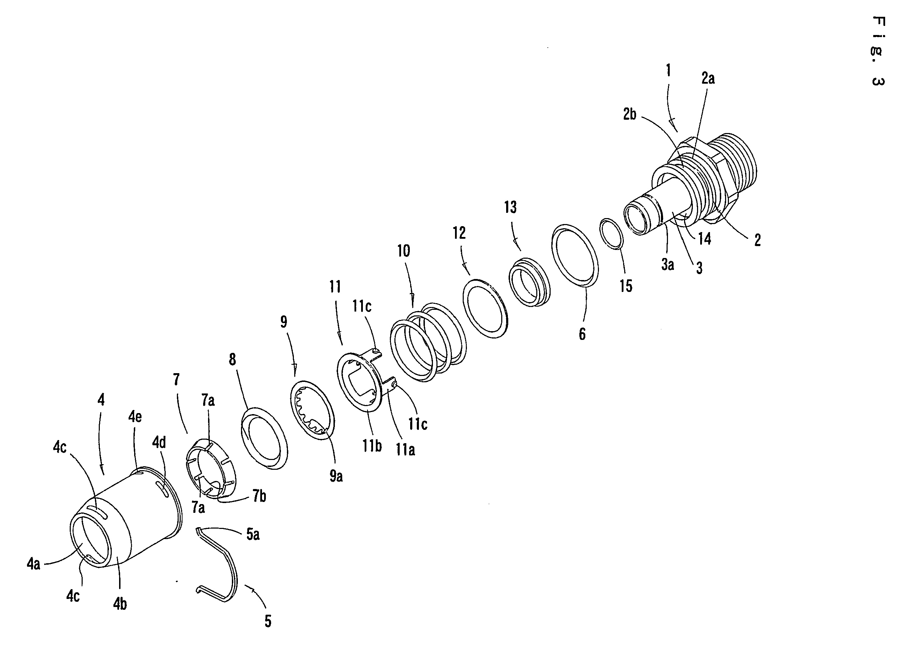

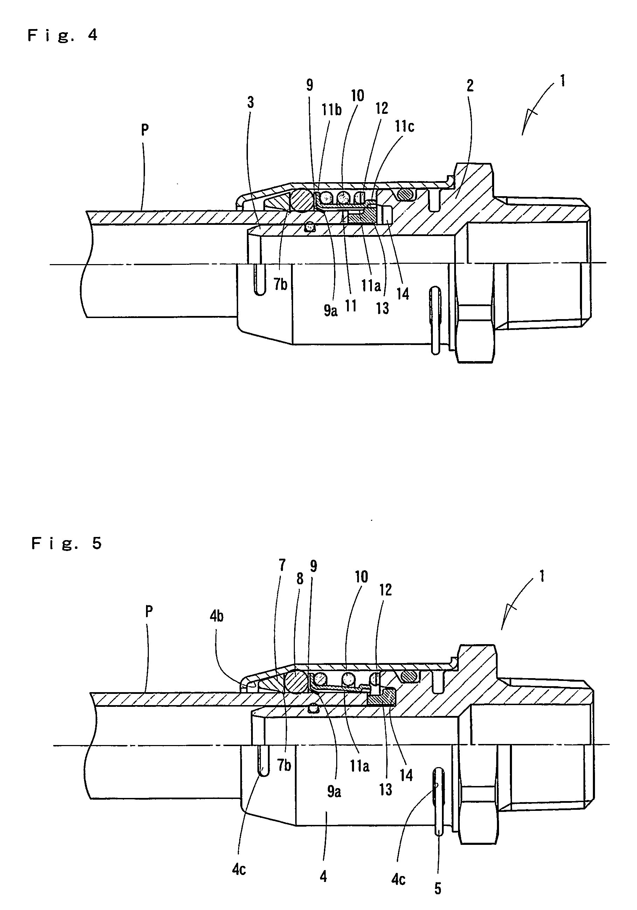

Fig. 1 illustrates a snap joint in the assembled state thereof in accordance with one embodiment of the present invention, Fig. 2 illustrates the snap joint of the embodiment of the present invention partly in cross section, Fig. 3 is an exploded perspective view of the snap joint of the embodiment of the present invention, and Figs. 4 and 5 illustrate the operation of the snap joint of the embodiment of the present invention.

### DESCRIPTION OF THE PREFERRED EMBODIMENTS

The preferred embodiments of the present invention are now discussed with reference to the drawings. Fig. 1 illustrates a snap joint in the assembled state thereof in accordance with one embodiment of the present invention, Fig. 2 illustrates the snap joint partly in cross section, and Fig. 3 is an exploded perspective view of the snap joint. A body of a snap joint 1 includes a barrel portion 2 as a portion thereof, a sleeve 3 which extends from the body of the snap joint 1, and over which a resin pipe P is fitted, a bag-like external cylinder 4, and a U-shaped clip 5 for fixing. The external cylinder 4 has an insertion hole 4a for receiving the resin pipe P in the front end portion thereof and a surface 4b tapered off toward the front end thereof. The external cylinder 4 has an observation window 4c on the tapered surface 4b and insertion slots 4d and 4e on the back end portion thereof for receiving the U-shaped clip 5. The barrel portion 2 of the snap joint body 1 has a groove 2a that receives the U-shaped clip 5. The U-shaped clip 5 is made of a flexible material having elastic force. After being inserted from the inside insertion slot 4d of the external cylinder 4, an end hook 5a of the U-shaped clip 5 is projected from the outside slot 4e. Also, the U-shaped clip 5 is received in the groove 2a and the external cylinder 4 is detachably connected to the snap joint body 1. Designated 6 is an O-ring, which is seated in a groove 2b formed in front of the groove 2a. The O-ring 6 assures sealing between the external cylinder 4 and the snap joint body 1.

Space is left between the external cylinder 4 and the sleeve 3 of the snap joint body 1 in the assembled state thereof. This space provides the important structure of the present invention. A chuck ring 7 has slits 7a aligned in a direction parallel with the axis of the snap joint body 1 and an edge 7b on the inner circumference thereof. The edge 7b is tightly engaged with the resin pipe P as the chuck ring 7 is shrunk in diameter. In this case, a plurality of edges 7b may be arranged in a sawtooth structure. Also arranged are a waterproof O-ring 8 which also functions as a buffer, and a lock ring 9 having, on the inner circumference thereof, a hook 9a inclined toward the direction of insertion of the resin pipe P. A compression spring 10 is held in the compressed state thereof around the outer circumference of a spring holder 11 and is restrained in extension by a washer 12.

A support ring 13 is located in front of the end of the resin pipe P before an insertion operation of the resin pipe P. The support ring 13 controls the diameter of the back end portion 11a of the spring holder 11. A circular socket 14 is formed on the back end of the sleeve 3 and allows the support ring 13 to be received therewithin after the insertion operation.

The spring holder 11 has an inner diameter that allows the resin pipe P to be inserted into. The spring holder 11 has an abutment flange portion 11b of the compression spring 10 on the front end thereof and a back end portion 11a that is easily shrinkable in diameter. The spring holder 11 has abutment projections 11c on the end of the back end portion 11a. The abutment projections 11c prevent the washer 12 from coming off and the compression spring 10 is held between the flange portion 11b and the washer 12.

Since the spring holder 11 is split into a plurality of extensions on the back end portion 11a. If no restraint means is used, the split extensions are deflected inwardly with the diameter thereof reduced. The support ring 13 restrains the deflection of the split extensions. When the resin pipe P is inserted until the support ring 13 is received into the circular socket 14, the restraining is released.

In this embodiment, the back end portion 11a is molded into the abutment projection 11c. Alternatively, a small piece may be bonded to the back end portion 11a, the back end portion 11a may folded back, or bent.

A waterproof O-ring 15, seated in a groove 3a arranged closer to the front end of the sleeve 3, assures sealing the inner surface of the resin pipe P. In accordance with the present embodiment, the waterproof O-rings 8 and 15 assure high waterproofness by sealing both the inner circumference and the outer circumference of the resin pipe P.

Figs. 4 and 5 illustrate the operation of the entire snap joint. Fig. 4 illustrates the snap joint with the resin pipe P just inserted thereinto, wherein the end of the resin pipe P abuts the support ring 13. Since the support ring 13 supports the back end portion 11a of the spring holder 11 from the inner circumference thereof, the back end portion 11a is prevented from being shrunk in diameter. The washer 12 is caught by the abutment projection 11c, and thereby holds the spring 10 against the flange portion 11b.

The hook 9a of the lock ring 9 is lightly engaged with the resin pipe P, thereby tentatively securing the resin pipe P. Since the hook 9a is inclined toward the insertion direction of the resin pipe P, a further insertion of the resin pipe P is not restricted.

If the resin pipe P is further inserted, the support ring 13 is received into the circular socket 14 at the back end of the support ring 13 and the back end portion 11a of the spring holder 11 is released from the diameter shrink restraining state. This releasing shrinks the back end portion 11a in diameter, thereby allowing the washer 12 to go beyond the peak of the abutment projection 11c, and thereby allowing the washer 12 to come off the spring holder 11. The compression spring 10, driven by the lock ring 13, extends at once, thereby pressing the chuck ring 7 and the O-ring together against the tapered surface 4b of the external cylinder 4. With the chuck ring 7 pressed, the chuck ring 7 shrinks in diameter causing the edge 7b to tightly engage with the resin pipe P. The chuck ring 7 thus reliably holds the resin pipe P. In this way, the connection of the resin pipe P is performed in a snap action.

Since the O-ring 8 is compressed between the lock ring 9 and the chuck ring 7, sealing effect is enhanced more. In accordance with the present invention, like the chuck ring 7, the lock ring 9 has also the hook 9a engaging with the resin pipe P and therefore, the separation between the lock ring 9 and the chuck ring 7 remains unchanged. As a result, the sealing effect of the O-ring is maintained for a long period of time.

Since the external cylinder 4 has the observation window 4c, a user can visually observe the chuck ring 7 through the observation window 4c and learn the completion of the connection operation.

The extension of the spring 10 is performed at once, allowing the flange portion 11b to impact the lock ring 9 or the washer 12 to impact the barrel portion 2 of the snap joint body 1, and thereby causes pulse sound. The user thus can learn the completion of the connection of the resin pipe P to the snap joint body 1.

### INDUSTRIAL APPLICABILITY

The present invention having the above-referenced arrangement not only allows the lock ring to secure the resin pipe in an initial phase but also sandwiches the O-ring between the lock ring and the chuck ring after the connection operation. Waterproof effect of the resin pipe P is thus enhanced. Since the O-ring is furnished on the outer circumference of the sleeve, the resin pipe P is waterproofed from both the inner and outer circumferences thereof. Since the external cylinder is detachably fixed using the U-shaped clip, the joint is disassembled. Maintenance job is easily performed. This arrangement also provides the advantage that resin members are separated from metal members in a disposal process. By observing the chuck ring through the observation window, a user visually recognizes the completion of the connection operation, and the operation efficiency is heightened.

## Claims

1. A snap joint for use with a resin pipe (P), comprising
a joint body (1) having a barrel portion (2) and a sleeve (3) extending from said barrel portion (2) and being adapted for fitting the resin pipe (P) over the sleeve (3);
an external cylinder (4) having a front end portion (4b) with an insertion hole (4a) for receiving the resin pipe (P), the front end portion (4b) being tapered toward the front end thereof and a back end thereof being fixed to the barrel portion (2) of the joint body (1);
a support ring (13) having a stepped shape in cross section, wherein the diameter of the support ring (13) on its back end is greater than on its front end, and being slidable to a back end of the sleeve (3) in response to the insertion of the resin pipe (P);
a spring holder (11) with a back end portion (11 a) being shrinkable in diameter, the arrangement being such that prior to a sliding action of the support ring (13), the shrinking of the diameter of the back end portion (11 a) of the spring holder (11) is restrained by the support ring (13),
a compression spring (10) hold between a front flange portion (11 b) of the spring holder (11) and a washer (12) being captured by abutment projections (11 c) arranged on the back end portion (11a) of the spring holder (11) when the shrinking of the diameter of the back end portion (11a) is restrained;
a lock ring (9) arranged in front of the flange portion (11 b) of the spring holder (11) and having on its inner circumference a hook (9a) inclined toward the insertion direction of the resin pipe;
a chuck ring (7) that is adapted to be driven by the lock ring (9) and has a shrinkable diameter along the tapered surface (4b) of the external cylinder (4), such that when the compression spring (10) extends, the chuck ring (7) tightly engages the outer circumference of the inserted resin pipe; and
an O-ring (8) that is interposed between the lock ring (9) and the chuck ring (7) and maintains tight contact between the outer circumference of the inserted resin pipe and the inner circumference of the external cylinder (4).

2. A snap joint according to claim 1, wherein the external cylinder (4) is detachably fixed to the barrel portion (2) of the joint body (1) with an U-shaped elastic clip (5).

3. A snap joint according to claim 1 or 2, wherein an O-ring (15) is fitted over the outer circumference of the sleeve (3).

4. A snap joint according to any of the preceding claims, wherein the tapered surface (4a) of the external cylinder (4) comprises an observation window (4c) for monitoring the chuck ring (7).

## Patentansprüche

1. Schnappverbindung zur Verwendung mit einem Harzrohr (P), die folgendes aufweist:
einen Verbindungskörper (1) mit einem Trommelteilbereich (2) und einer Hülse (3), die sich von dem Trommelteilbereich (2) erstreckt und zum Einpassen des Harzrohrs (P) über die Hülse (3) geeignet ist;
einen externen Zylinder (4) mit einem vorderen Endteilbereich (4b) mit einem Einfügeloch (4a) zum Aufnehmen des Harzrohrs (P), wobei der vordere Endteilbereich (4b) in Richtung zu seinem vorderen Ende zugespitzt ist und sein hinteres Ende an dem Trommelteilbereich (2) des Verbindungskörpers (1) befestigt ist;
einen Stützring (13), der eine gestufte Form im Querschnitt hat, wobei ein Durchmesser des Stützrings (13) an seinem hinteren Ende größer als an seinem vorderen Ende ist, und der in Reaktion auf das Einfügen des Harzrohrs (P) zu einem hinteren Ende der Hülse (3) schiebbar ist;
eine Federhalterung (11) mit einem hinteren Endteilbereich (11 a), der in Bezug auf den Durchmesser schrumpffähig ist, wobei die Anordnung so ist, dass vor einer Schiebeaktion des Stützrings (13) das Schrumpfen des Durchmessers des hinteren Endteilbereichs (11a) der Federhalterung (11) durch den Stützring (13) beschränkt ist;
eine Druckfeder (10), die zwischen einem vorderen Flanschteilbereich (11 b) der Federhalterung (11) und einer Beilagscheibe (12) gehalten ist, die durch Auflageransätze (11c) gefangen ist, die an dem hinteren Endteilbereich (11a) der Federhalterung (11) angeordnet sind, wenn das Schrumpfen des Durchmessers des hinteren Endteilbereichs (11a) beschränkt ist;
einen Verriegelungsring (9), der vor dem Flanschteilbereich (11 b) der Federhalterung (11) angeordnet ist und an seinem inneren Umfang einen Haken (9a) hat, der in Richtung zu der Einfügerichtung des Harzrohrs geneigt ist;
einen Spannvorrichtungsring (7), der dazu geeignet ist, durch den Verriegelungsring (9) angetrieben zu werden, und einen schrumpffähigen Durchmesser entlang der zugespitzten Oberfläche (4b) des externen Zylinders (4) hat, so dass dann, wenn sich die Druckfeder (10) ausdehnt, der Spannvorrichtungsring (7) mit dem äußeren Umfang des eingefügten Harzrohrs dicht in Eingriff steht; und
einen O-Ring (8), der zwischen dem Verriegelungsring (9) und dem Spannvorrichtungsring (7) angeordnet ist und einen dichten Kontakt zwischen dem äußeren Umfang des eingefügten Harzrohrs und dem inneren Umfang des externen Zylinders (4) beibehält.

2. Schnappverbindung nach Anspruch 1, wobei der externe Zylinder (4) mit einem U-förmigen elastischen Clip (5) loslösbar an dem Trommelteilbereich (2) des Verbindungskörpers (1) befestigt ist.

3. Schnappverbindung nach Anspruch 1 oder 2, wobei ein O-Ring (15) über den äußeren Umfang der Hülse (3) eingepasst ist.

4. Schnappverbindung nach einem der vorangehenden Ansprüche, wobei die zugespitzte Oberfläche (4a) des externen Zylinders (4) ein Beobachtungsfenster (4c) zum Überwachen des Spannvorrichtungsrings (7) aufweist.

## Revendications

1. Raccord rapide destiné à une utilisation avec un tuyau de résine (P) comprenant
un corps de raccord (1) ayant une portion cylindrique (2) et un manchon (3) qui s'étend depuis la portion cylindrique (2) et est adapté à une fixation du tuyau de résine (P) pardessus le manchon (3) ;
un cylindre externe (4) ayant une portion avant (4b) avec une ouverture d'insertion (4a) destinée à recevoir le tuyau de résine (P), la portion avant (4b) étant conique en direction de l'extrémité avant du cylindre externe (4) et une extrémité arrière étant fixée à la portion cylindrique (2) du corps de raccord (1);
une bague support (13) ayant une section transversale de forme étagée, le diamètre de la bague support (13) étant plus grand à l'extrémité arrière qu'à l'extrémité avant et pouvant coulisser vers l'arrière du manchon (3) sous l'effet d'insertion du tuyau de résine (P);
un support de ressort (11) avec une portion arrière (11a), dont le diamètre est rétrécissable, la disposition étant telle que préalablement à l'action coulissante de la bague support (13), le rétrécissement du diamètre de la portion arrière (11 a) du support de ressort (11) est limité par la bague support (13),
un ressort de compression (10) maintenu entre une portion à bride avant (11b) du support de ressort (11) et une rondelle (12) qui est capturée par des saillies de butée (11c) disposées sur la portion arrière (11a) du support de ressort (11) lorsque le rétrécissement du diamètre de la portion arrière (11a) est limité;
une bague de verrouillage (9) disposée en face de la portion à bride (11b) du support de ressort (11) et présentant sur sa circonférence interne un crochet (9a) incliné dans la direction d'insertion du tuyau de résine.
une bague de serrage (7) qui est adaptée à être entraînée par la bague de verrouillage (9) et présente un diamètre de rétrécissement le long de la surface conique (4b) du cylindre externe (4) de manière que lorsque le ressort de compression (10) s'étend, la bague de serrage (7) entre hermétiquement en prise avec la circonférence externe du tuyau de résine inséré, et
un joint torique (8) qui est interposé entre la bague de verrouillage (9) et la bague de serrage (7) et conserve un contact hermétique entre la circonférence externe du tuyau de résine inséré et la circonférence interne du cylindre externe (4).

2. Raccord rapide suivant la revendication 1, dans lequel le cylindre externe (4) est fixé à la portion cylindre (2) du corps de raccord (1) de manière détachable à l'aide d'un clip élastique en forme de U (5).

3. Raccord rapide suivant la revendication 1 ou 2, dans lequel le joint torique (15) est monté par-dessus la circonférence externe du manchon (3).

4. Raccord rapide suivant une quelconque des revendications précédentes, dans lequel la surface conique (4a) du cylindre externe (4) comprend une fenêtre d'observation (4c) pour la surveillance de la bague de serrage (7).
